# EUROPÄISCHE PATENTANMELDUNG

(11) **EP 0 789 500 A2**
(43) Veröffentlichungstag der Anmeldung: **13.08.1997**
(21) Anmeldenummer: 97250018.5
(22) Anmeldetag: 31.01.1997
(51) Int. Cl.: H04Q 7/32

(54) **Verfahren zur Veränderung der Berechtigung zur Kontakaufnahme in einem bidirktionalen Mobilfunknetz und Telekommunikationsendgerät**

(30) Priorität: 08.02.1996 DE 19606302
(71) Anmelder: MANNESMANN Aktiengesellschaft, 40213 Düsseldorf (DE)
(72) Erfinder: Jungemann, Matthias, Dipl.-Ing., 52064 Aachen (DE)
(74) Vertreter: Meissner, Peter E., Dipl.-Ing.

(57) **Zusammenfassung**

Die Erfindung betrifft ein Verfahren zur Veränderung der Berechtigung zur Kontaktaufnahme zwischen einem Telekommunikationsendgerät (Endgerät) in einem bidirektionalen Mobilfunknetz und einem oder mehreren Mitgliedern einer Gruppe von Teilnehmem des Mobilfunknetzes, wobei die Festlegung, zu welchen Teilnehmern der Gruppe die Kontaktaufnahme möglich ist, durch einen entsprechenden Dateneintrag auf einer intelligenten Identifikationskarte (SIM-Karte) des Endgerätes erfolgt, der durch den Aussteller der SIM-Karte vorgenommen wird (Konfigurierung der SIM-Karte).Der Aussteller zur Änderung der Konfigurierungsendet über eine Sendezentrale des Mobilfunknetzes eine Änderungsmitteilung in Form einer digitalen Kurzinformation (SMS-Nachricht) an die SIM-Karte des Endgerätes, wobei die SMS-Nachricht einen Code zur Änderung (header) als Änderungsmitteilung für die SIM-Karte enthält, der durch einen auf der SIM-Karte gespeicherten Algorithmus erkannt wird, und wobei die SMS-Nachricht die erforderlichen Parameter enthält, anhand deren die SIM-Karte die Liste der aus der Gruppe zur Kontaktaufnahme freigegebenen Teilnehmer aktualisiert und speichert.

## Beschreibung

Die Erfindung betrifft ein Verfahren zur Veränderung der Berechtigung zur Kontaktaufnahme zwischen einem Telekommunikationsendgerät (Endgerät) in einem bidirektionalen Mobilfunknetz und einem oder mehreren Mitgliedern einer Gruppe von Teilnehmern des Mobilfunknetzes, wobei die Festlegung, zu welchen Teilnehmern der Gruppe die Kontaktaufnahme möglich ist, durch einen entsprechenden Dateneintrag auf einer intelligenten Identifikationskarte (SIM-Karte) des Endgerätes erfolgt. Dieser Dateneintrag (Konfigurierung der SIM-Karte) wird durch den Aussteller der SIM-Karte vorgenommen. Ferner betrifft die Erfindung ein Telekommunikationsendgerät mit einer SIM-Karte für die Benutzung in einem bidirektionalen Mobilfunknetz, wobei auf der SIM-Karte die Teilnehmer des Mobilfunknetzes gespeichert sind, zu denen eine Kontaktaufnahme aktuell möglich ist.

Für bestimmte Dienstleistungen, die im Rahmen eines bidirektionalen Mobilfunknetzes begrenzten Teilnehmerkreisen zur Verfügung gestellt werden, gibt es Telekommunkationsendgeräte, die lediglich die Aufnahme der Kommunikation zu einem fest vorgegebenen Teilnehmerkreis ermöglichen. Ein Beispiel hierfür ist etwa die Bildung geschlossener Benutzergruppen (Mobilfunkgeräte in den Fahrzeugen einer Spedition oder eines Busunternehmens), die nur untereinander kommunizieren können sollen. Ein anderes Beispiel wäre die Benutzergruppe eines bestimmten Serviceproviders.

Die Beschränkung der Kontaktaufnahme wird dadurch realisiert, daß das Endgerät mit einer intelligenten Identifikationskarte (SIM-Karte) ausgestattet ist, auf der die Rufnummern der für die Kontaktaufnahme zulässigen Teilnehmer gespeichert sind. Wenn dieser Teilnehmerkreis verändert werden soll, also entweder vergrößert oder verkleinert werden soll, dann ist dies bisher nur dadurch möglich, daß die SIM-Karte körperlich zum Aussteller dieser SIM-Karte gebracht wird und dort mittels eines entsprechenden elektronischen Gerätes mit einem entsprechend geänderten Speicherinhalt versehen wird. Diese Prozedur ist mit relativ großem Aufwand verbunden.

Aufgabe der Erfindung ist es, ein Verfahren der gattungsgemäßen Art vorzuschlagen, bei dem der Aufwand für die Änderung der Konfigurierung einer SIM-Karte erheblich vermindert ist. Ferner soll ein Telekommunikationsgerät angegeben werden, das eine weniger aufwendige Änderung der Konfigurierung einer SIM-Karte ermöglicht.

Im Hinblick auf ein gattungsgemäßes Verfahren wird diese Aufgabe dadurch gelöst, daß der Aussteller zur Änderung der Konfigurierung einer SIM-Karte über eine Sendezentrale des Mobilfunknetzes eine Änderungsmitteilung in Form einer digitalen Kurzinformation (SMS-Nachricht) an die SIM-Karte des Endgerätes sendet, wobei die SMS-Nachricht (Short Message Service) einen Code zur Erkennung (header) als Änderungsmitteilung für die SIM-Karte enthält. Dieser Erkennungscode wird durch einen auf der SIM-Karte gespeicherten Algorithmus erkannt. Die an das Endgerät übermittelte SMS-Nachricht enthält neben dem Erkennungscode auch die erforderlichen Parameter, anhand deren die SIM-Karte die Liste derjenigen Teilnehmer aktualisieren und anschließend speichern kann, die zur Kontaktaufnahme für das jeweilige Endgerät freigegeben sind. Mit dem Endgerät können also nur die auf der SIM-Karte gespeicherten Teilnehmer erreicht werden. Um einen Schutz vor unberechtigten Änderungen der Konfigurierung der SIM-Karte zu gewährleisten, empfiehlt es sich, in die Änderungsmitteilung einen Schlüssel einzubeziehen und an das Endgerät bzw. die SIM-Karte zu übermitteln, anhand dessen die Authentizität der Mitteilung für die SIM-Karte des Endgerätes erkennbar ist. Erst nach dem Lesen und Erkennen dieses Schlüssels wird die Schreibberechtigung zur Speicherung der aktualisierten Gruppe von Teilnehmern auf der SIM-Karte erteilt.

Die Änderung der Konfigurierung der SIM-Karte kann durch einen von dem Endgerät an die jeweilige Sendezentrale gerichteten Ruf beim Aussteller angefordert werden. Somit kann vom Endbenutzer in vorteilhafter Weise eine Änderung des von ihm gewünschten Dienstleistungsumfangs initiiert werden. Umgekehrt ist es aber auch möglich, daß vom Aussteller der SIM-Karte ohne einen entsprechenden Auftrag eine solche Änderung erfolgt. Dies kann beispielsweise mit Einschränkungen oder Erweiterungen seines Dienstleistungsangebotes zusammenhängen.

Ein Telekommunikationsendgerät gemäß der vorliegenden Erfindung, das mit einer intelligenten Identifikationskarte (SIM-Karte) für die Benutzung in einem bidirektionalen Mobilfunknetz eingerichtet ist und bei dem die Teilnehmer des Mobilfunknetzes auf der SIM-Karte gespeichert sind, zu denen eine Kontaktaufnahme von dem Endgerät aus aktuell möglich ist, zeichnet sich dadurch aus, daß die SIM-Karte einen Algorithmus gespeichert hat, der anhand eines Codes (header) in einer von dem Endgerät empfangenen digitalen Kurznachricht (SMS-Nachricht) erkennt, ob es sich bei der jeweiligen SMS-Nachricht um eine Änderungsmitteilung zur Änderung der Konfigurierung der SIM-Karte handelt. Die SIM-Karte ist darüber hinaus darauf eingerichtet, im Falle einer empfangenen Änderungsmitteilung die sich aus den übermittelten Parametern der Änderungsmitteilung ergebende aktualisierte Konfigurierung der SIM-Karte zu speichern. Um einen Schutz gegen unautorisierte Änderungen der Konfiguration zu gewährleisten, ist in vorteilhafter Weiterbildung der Erfindung vorgesehen, daß die aktualisierte Konfigurierung auf der SIM-Karte nur dann speicherbar ist, wenn in der empfangenen Änderungsmitteilung ein von der SIM-Karte erkannter Schlüssel zur Erteilung einer Schreibberechtigung enthalten ist.

Vorzugsweise ist das erfindungsgemäße Endgerät für den Einsatz in einem Mobilfunknetz nach dem GSM- oder dem DCS-Standard eingerichtet. Die Erfindung läßt sich jedoch auch in anderen bidirektionalen Mobilfunknetzen einsetzen.

Anhand des nachfolgenden Ausführungsbeispiels wird die Erfindung näher erläutert.

Ein Endbenutzer erhält von einem Serviceunternehmen (Aussteller einer SIM-Karte) ein GSM-Endgerät, welches ihn nur befähigt, mit der Servicezentrale und ggf. mit weiteren von der Servicezentrale autorisierten Rufnummern zu kommunizieren. Der Endbenutzer ist über das Mobilfunknetz für alle ankommenden Rufe blockiert. Die Teilnehmersubsription des Endbenutzers basiert auf einer im sogenannten "fixed-dialing-modus" befindlichen SIM-Karte. Das bedeutet, daß es dem Endbenutzer nur möglich ist, abgehende Gespräche zu den auf der SIM-Karte festgelegten Rufnummern zu führen. Das Recht zum Ändern dieser Rufnummern liegt allein bei der Servicezentrale.

Um derartige Änderungen in der Konfigurierung der SIM-Karte durchzuführen, muß der Endbenutzer erfindungsgemäß nicht mehr mit seiner SIM-Karte zum Serviceunternehmen, also zum Kartenaussteller kommen. Eine Erweiterung des erlaubten Rufnummernkreises kann beispielsweise auf Anforderung des Endbenutzers oder im Bedarfsfall auch selbständig durch die Servicezentrale mittels einer speziell gekennzeichneten SMS-Nachricht erfolgen, die an das betreffende Endgerät bzw. dessen SIM-Karte übermittelt wird. Das bedeutet, daß die tatsächliche Änderung der Konfigurierung der SIM-Karte an jedem beliebigen Ort innerhalb des Sendebereichs des bidirektionalen Mobilfunknetzes erfolgen kann. Zur Änderung der Rufnummerneinträge auf der SIM-Karte ist diese mit einem speziellen Algorithmus ausgestattet. Dieser sieht folgenden Ablauf vor:

Empfängt der Teilnehmer eine SMS-Nachricht der Servicezentrale, die als Änderungsmitteilung für die SIM-Karte angelegt ist, so wird diese Änderungsmitteilung auf der SIM-Karte gespeichert. Anhand des "headers" der SMS-Nachricht erkennt der Algorithmus der SIM-Karte, daß es sich bei dieser Nachricht um eine solche Änderungsmitteilung zur Änderung der Konfigurierung der SIM-Karte handelt. Weiterhin wird anhand eines in der SMS-Nachricht übermittelten Schlüssels erkannt, daß die Nachricht authentisch ist, also von der allein berechtigten Servicezentrale stammt. Die im übrigen in der Nachricht enthaltenen Parameter zur Änderung des erlaubten Nummernkreises ("fixed-dialing-numbers") werden ausgewertet. Nur wenn der Schlüssel, mit dessen Hilfe entsprechende Schreibrechte auf den Datenfeldern für die zulässigen Rufnummern erhältlich sind, erkannt worden ist, werden die übermittelten Rufnummern in den vorgesehenen Datenfeldern eingetragen. Anschließend stehen diese neuen Nummern für die Benutzung durch den Endbenutzer zur Verfügung.

Mit der vorliegenden Erfindung wird die Änderung der Konfigurierung einer SIM-Karte mit minimalen Aufwand möglich, da das Aufsuchen einer Servicestelle für entsprechende Änderungen entfällt und die Änderungen an beliebigen Orten mittels drahtlos übertragener Informationen durchgeführt wird.

## Patentansprüche

1. Verfahren zur Veränderung der Berechtigung zur Kontaktaufnahme zwischen einem Telekommunikationsendgerät (Endgerät) in einem bidirektionalen Mobilfunknetz und einem oder mehreren Mitgliedern einer Gruppe von Teilnehmern des Mobilfunknetzes, wobei die Festlegung, zu welchen Teilnehmern der Gruppe die Kontaktaufnahme möglich ist, durch einen entsprechenden Dateneintrag auf einer intelligenten Identifikationskarte (SIM-Karte) des Endgerätes erfolgt, der durch den Aussteller der SIM-Karte vorgenommen wird (Konfigurierung der SIM-Karte),
dadurch gekennzeichnet,
daß der Aussteller zur Änderung der Konfigurierung über eine Sendezentrale des Mobilfunknetzes eine Änderungsmitteilung in Form einer digitalen Kurzinformation (SMS-Nachricht) an die SIM-Karte des Endgerätes sendet, wobei die SMS-Nachricht einen Code zur Änderung (header) als Änderungsmitteilung für die SIM-Karte enthält, der durch einen auf der SIM-Karte gespeicherten Algorithmus erkannt wird, und wobei die SMS-Nachricht die erforderlichen Parameter enthält, anhand deren die SIM-Karte die Liste der aus der Gruppe zur Kontaktaufnahme freigegebenen Teilnehmer aktualisiert und speichert.

2. Verfahren nach Anspruch 1,
dadurch gekennzeichnet,
daß in der Änderungsmitteilung ein Schlüssel übermittelt wird, anhand dessen die Authentizität der Änderungsmitteilung für die SIM-Karte des Endgerätes erkennbar ist und nach dessen Lesen die Schreibberechtigung zur Speicherung der aktualisierten Gruppe von Teilnehmern auf der SIM-Karte erteilt wird.

3. Verfahren nach Anspruch 1 oder 2,
dadurch gekennzeichnet,
daß die Änderung der Konfigurierung der SIM-Karte durch einen von dem Endgerät an die Sendezentrale gerichteten Ruf beim Aussteller angefordert wird.

4. Telekommunikationsendgerät mit einer intelligenten Identifikationskarte (SIM-Karte) für die Benutzung in einem bidirektionalen Mobilfunknetz, wobei auf der SIM-Karte die Teilnehmer des Mobilfunknetzes gespeichert sind, zu denen eine Kontaktaufnahme aktuell möglich ist (Konfigurierung der SIM-Karte),
dadurch gekennzeichnet,
daß die SIM-Karte einen Algorithmus gespeichert hat, der anhand eines Codes (header) in einer von dem Endgerät empfangenen digitalen Kurznachricht (SMS-Nachricht) erkennt, ob es sich bei der jeweiligen SMS-Nachricht um eine Änderungsmitteilung zur Änderung der Konfigurierung der SIM-Karte handelt, und daß im Falle einer Änderungsmitteilung die sich aus den übermittelten Parametern der Änderungsmitteilung ergebende aktualisierte Konfigurierung der SIM-Karte in dieser speicherbar ist.

5. Endgerät nach Anspruch 4,
dadurch gekennzeichnet,
daß die aktualisierte Konfigurierung auf der SIM-Karte nur dann speicherbar ist, wenn in der Änderungsmitteilung ein von der SIM-Karte erkannter Schlüssel zur Erteilung einer Schreibberechtigung enthalten ist.

6. Endgerät nach Anspruch 4 oder 5,
dadurch gekennzeichnet,
daß das Endgerät für den Einsatz in einem Mobilfunknetz nach dem GSM- oder dem DCS-Standard eingerichtet ist.
